# EUROPEAN PATENT APPLICATION

(11) **EP 3 995 986 A1**
(43) Date of publication of application: **11.05.2022**
(21) Application number: 20382969.2
(22) Date of filing: 10.11.2020
(51) Int. Cl.: G06F 30/23, B64C 1/06, B64C 1/14, G06F 113/10

(54) **FITTING FOR AN AIRCRAFT**

(71) Applicant: Airbus Operations, S.L.U., 28906 Getafe (Madrid) (ES)
(72) Inventor: HERNÁIZ LÓPEZ, Guillermo, E-28906 Getafe, Madrid (ES); GUINALDO FERNÁNDEZ, Enrique, E-28906 Getafe, Madrid (ES); COLMENAREJO MATELLANO, Nuria, E-28906 Getafe, Madrid (ES); MARTÍNEZ CAÑIZARES, Alejandro, E-28906 Getafe, Madrid (ES); FERNÁNDEZ PÉREZ, Ernesto, E-28906 Getafe, Madrid (ES)
(74) Representative: ABG Intellectual Property Law, S.L.

(57) **Abstract**

The invention provides a fused composite manufactured fitting (10) comprising a first (11) substantially flat wall (11, 12) comprising a first (11) proximal edge and a first (11) distal edge, and a first (11) and a second (12) lateral edges;
a second (12) substantially flat wall (11, 12) comprising a second (12) proximal edge and a second (12) distal edge, and a third and a fourth lateral edges;
a first curved transition area (13) integrally merging the first (11) proximal edge of the first (11) flat wall (11, 12) with the second (12) proximal edge of the second (12) flat wall (11, 12);
wherein the first curved transition area (13) is shaped as a cylindrical segment, the first (11) and second (12) substantially flat walls are at an angle with respect to each other;
the first (11) and second (12) substantially flat wall (11, 12) are both parallel to a longitudinal axis of the first curved transition area (13), and at least one of the first (11) and second (12) distal edges is substantially parallel to the longitudinal axis of the curved transition area (13, 20).

## Description

### TECHNICAL FIELD OF THE INVENTION

The present invention belongs to the technical field of structural reinforcements in an airframe and joints between structural parts of the airframe. In particular, the invention provides a structural fitting made of fused composite material manufactured by an additive manufacturing process.

More in particular, the invention belongs to the field of manufacturing methods for such fused structural fittings by means of Fused Composites Manufacturing based on computer-implemented 3D designs.

### BACKGROUND OF THE INVENTION

In the aircraft industry, there are certain structures of the aircraft where structural fittings are needed in order to reinforce areas of the airframe or act as structural joints between different elements. More in particular, said fittings can be used to reinforce structures or joints between elements forming an L-type geometry, that is, a geometry where part of a structure comprised essentially in a flat plane transitions to another structural plane having a certain angle with respect to the first one, by means of a curved 'transition' or 'hinging' area.

As said, unlike the latter, these fittings may also take the form of local reinforcements of larger parts such as beams, longerons, frames, etc. thus acting as ribs to modify and alleviate in service the stresses that the part is subjected to at a specific point.

Regardless whether it is used for connecting parts or reinforcing them locally, fittings are subjected to very complex stress states where both tensile and shear loads are typically transmitted through them toward their connection areas with the airframe parts, making them in some circumstances undergoing high structural stresses.

In the related industry, depending on the tensional state in service, these fittings may also be known as clips in case the joining parts are much lighter than the common industrial parts and, then, do not impose structural severity. In other words, clips are used for holding cabling, wiring, or other minor auxiliary components to the primary structures for their routing.

On the contrary, due to the structural loads, the design requirements of the structural fittings are very demanding, which leads to the implementation of directional stiffening members; employing very resistant materials; increasing the thickness of most stressed parts and design geometries that adapt geometrically to the area of connection.

According to the above, the structural fittings used traditionally in the aircraft industry as reinforcing elements for the aforementioned purposes are metallic machined shear-brackets. More in particular, shear-brackets made of titanium alloys in those cases wherein the fitting is subjected to extreme environmental conditions in service, such as corrosion or high temperature.

A good example of high-strength alloy shear-brackets can be found in the frames of the airframe tailcone where the Auxiliary Power Unit location imposes high-demanding requirements to these parts in terms of temperature withstanding and vibrations. Thus, at this time it is only envisaged the use of metallic (e.g., titanium) parts which unfortunately are not only expensive but also have a very challenging fabrication giving rise to material-optimized simply-geometry parts.

Thus, there is a need in the aircraft industry for an alternative cost-effective solution aiming at reducing recurring and non-recurring costs of the fittings manufacturing without jeopardizing their structural behaviour.

### SUMMARY OF THE INVENTION

The present invention provides a solution for the aforementioned problems, by a fused composite manufactured fitting according to claim 1. The invention also provides a method for manufacturing said fitting according to claim 15. Advantageous embodiments are defined in the dependent claims.

In a first inventive aspect, the invention provides a fused composite manufactured fitting comprising:
- a first substantially flat wall comprising a first proximal edge and a first distal edge, and a first and a second lateral edges;
- a second substantially flat wall comprising a second proximal edge and a second distal edge, and a third and a fourth lateral edges;
- a first curved transition area integrally merging the first proximal edge of the first flat wall with the second proximal edge of the second flat wall;
wherein the first curved transition area is shaped as a cylindrical segment; the first and second substantially flat walls are at an angle with respect to each other; the first and second substantially flat walls are both parallel to a longitudinal axis of the first curved transition area; and at least one of the first and second distal edges is substantially parallel to the longitudinal axis of the curved transition area.

Throughout the entire document, reference shall be made to a number of particular terms for which a description will be now provided. Therefore, these terms must be construed as follows.

Through this document a fitting should be understood as a structural element intended for joining different parts and, therefore, it is provided with a first and a second substantially flat walls angled to each other and with respective securing areas. Accordingly, these securing areas may be provided with securing means such as holes suitable for receiving bolts, rivets, or other fastening means, or even adhesives for a satisfactory joining.

Depending on the tensional state in service, these fittings may also be known as clips in case the secured parts are much lighter than the common industrial parts (e.g., frames, longerons, ribs, etc.) and, then, do not impose structural severity. In other words, clips are used for holding cabling, wiring, or other minor auxiliary components to the primary structures for their routing.

When referring to conventional "composite material" used for manufacturing the structural parts of the airframe, it shall be understood as any type of material, for example CFRP (Carbon Fibre Reinforced Polymers), which comprises two or more physically distinguishable parts and mechanically separable, the two or more parts not being able to dissolve among each other.

More in particular, reference is made to "composite laminates", as an essential element of the building up process of said airframe structural parts. Said laminates shall be "regarded" as multiple stacked plies, each one comprising reinforcement fibres impregnated within a resin matrix, such as in the form of a 'pre-preg'.

These laminates may be pre-formed into particular shapes and then brought together to conform moderately complex shapes according to the design of the structural part. When forming complex shapes, such as corners, the laminate thickness may deviate from the nominal thickness obtained for flat plates. This is due to two phenomena that occur in corners.

On one side, because of the curved geometry, the available consolidation pressure differs from the expected pressure. Furthermore, hinging zones with high or moderate curvature results in the creation of compression stress on the internal plies of the laminate and tension stress on the external ones, this event potentially leading to delamination.

On the other side, friction between laminates may prevent adequate conformation of the laminate to the mould. As a result, and despite the efforts made for reducing the probability of a defect originating, making use of vacuum bags, autoclave and/or high pressure hot-press, certain defects may originate, such as porosity (interlaminar voids) which may jeopardize continuity in the properties of the final composite part.

In view of the these drawbacks associated to manufacturing parts with complex geometries by conventional composite material techniques, along with the aforementioned local stress concentrations, current fitting designs disregard using other material than alloys (e.g., titanium) for manufacturing structural fittings.

Additive Manufacturing (AM), also referred to as 3D printing, relates to current manufacturing methods and technologies wherein three-dimensional components are built up applying successive layers of material under computer control, departing from a digital model of the component to be produced. Typically, the material (either meltable material or matrix material in the case of reinforced materials) changes to a liquid upon the application of heat and solidifies (or hardens) to a solid when cooled.

Additionally, before printing, the digital CAD sketch of the fitting is digitally sliced into multiple horizontal sections or layers. The printer controller then uses this generated slicing to manufacture the fitting sequentially, for instance with one layer at a time (i.e. layer-by-layer), with each layer adhering or bonding to the previous one.

Many technologies are encompassed within Additive Manufacturing technologies, depending on the form of the material and machine technology used. Preferably, the fused composite fitting of the invention is manufactured using Additive Manufacturing technologies such as *Fused Composites Manufacturing* (FCM).

FCM is an additive manufacturing technology wherein a molten thermoplastic filament reinforced with fibrous reinforcement material (e.g., carbon, glass, aramid) is extruded through a nozzle that traces the surface pattern for each particular layer. The nozzle is responsible for keeping the plastic at a temperature just above its melting point so that it flows easily through the nozzle and forms the layer. The plastic solidifies immediately after application from the nozzle, thus bonding bonds to the layer below.

It provides a great alternative to conventional processes for the fabrication of composite material components due to its ability to produce structures having complex geometries.

Source material is thermoplastic filament reinforced with fibrous reinforcement material. Binding mechanism is thermal and activation energy is based on a heated extrusion nozzle.

The filaments may be made of ABS (Acrylonitrile butadiene styrene), PA (Polyamide), PC (Polycarbonate), PPSU (Polyphenyl sulfone), PEI (Polyetherimide), PEEK (Polyether ether ketone), PEKK (Polyetherketoneketone) or any other high performance thermoplastic material.

In a preferred embodiment, the thermoplastic material is of any of the following: PEKK, PPS, PAEK, or PEEK. More preferably, the thermoplastic material is PAEK or PEEK. Most preferably the thermoplastic material is PEEK or PPS.

According to the invention, the fibrous material reinforcement may be in the form of fibrils (very short and/or irregular fibres), nanofibers, carbon fillers, short fibres (length <1mm), or continuous fibres (extended continuously along the whole filament and thus along the whole length/width of the filler when manufactured), for instance. Preferably, the fibrous material reinforcement is in the form of continuous fibres and/or short-fibres, wherein continuous fibres are preferred.

Advantageously, as the fused composite fittings can be modelled by a 3D modelling software (Computer Aided Design or CAD), the CAD sketch (i.e. the 3D electronic model) can be dimensionally closer to the final area intended to be fixed to. Also, because the printed parts have little deviation with respect to the 3D sketch, the resulting fused composite manufactured fitting is proximate to the original connection area space and is thus better fixed thereto.

In this sense, the transition or hinging area, that is, the corner or curved zone where a portion of the fitting comprised in a structural plane progresses to a different plane, can be accurately tuned and shaped with the desired geometry so as to continuously and smoothly connect to the airframe (i.e., the part of the frame/connection between parts that the fitting will reinforce).

Accordingly, said continuous and homogeneous connection between the fused composite manufactured fitting and the aircraft achieved by the first and second substantially flat walls, along with the transition area, results in optimal load transmission through the connection area between the aircraft and the fused composite manufactured fitting, thus contributing to improve the local unfolding behaviour.

Thanks to the flexibility of the FCM technique, the fused composite manufactured fitting can be provided directly on the connection area of the airframe to be reinforced, or, otherwise, it can be produced independently and at a later stage be fixed by means of a bolted joint or by adhesives.

Besides, the advantage of printing the fused composite fittings by successive addition of material reduces the buy-to-fly ratio, i.e. the ratio between mass of material that is required to produce a part and the mass of material in the finished aeronautical structure.

More in particular, the substitution of Titanium-based alloys results in a drastic reduction of the environmental impact of the entire structural fitting design and production chain. Thanks to the use of Fused Composite Manufacturing (FCM), the necessary energy consumption associated with the processes of obtaining, handling, and extruding/consolidating the raw material is greatly reduced.

Furthermore, unlike the traditional concept based on Titanium alloys, the solution proposed by the invention is an alternative that allows the recycling of a great portion of the final product obtained. Additionally, the production of the proposed fused composite material fittings using Additive Manufacturing technique increases the operational capacity, due to the greater flexibility it offers, both for the patterning of designs adapted to complex geometries and the ease and lower cost of resources for the production thereof.

As known, Titanium alloys are stronger than composites, but composites are lighter (around 1/3 of its density) than Ti-alloys, so larger fittings may be envisaged with the present invention to fulfil these structural requirements without impacting or even providing savings in the total weight. By "larger", it is referred to the thickness, the total area contacting the reinforced part or higher bending radius to avoid sharp angles in the deposited filaments weakening the curved transition areas.

As a collateral advantage with respect to solid fittings, in fused composites, for a given amount of material, filament orientation during manufacturing may provide a strength surplus thank to the anisotropy of the resulting printed fitting.

In a particular embodiment, at least one of the lateral edges is substantially perpendicular to the longitudinal axis of the curved transition area.

In a particular embodiment, at least one of the first and second distal edges is oblique to the longitudinal axis of the curved transition area.

In a particular embodiment, at least one of the lateral edges is oblique to the longitudinal axis of the curved transition area.

In a particular embodiment, the fused composite manufactured fitting comprises third wall comprising a first edge and a second edge, the third wall being integrally merged with the first and second walls, such that:
- the first edge of the third wall is integrally merged with at least a portion of the first distal edge of the first wall by means of a second curved transition area shaped as a cylindrical segment; and
- the second edge of the third wall is integrally merged with at least a portion of the second distal edge of the second wall by means of a third curved transition area shaped as a cylindrical segment,
wherein a closed cross-sectional shape of the fitting is defined such that the fitting comprises a hollow beam shape lengthwise.

In addition to the continuous and homogeneous connection between the fused composite manufactured fitting and the aircraft achieved by the first and second substantially flat walls, along with the transition area behaviour, the closed cross-sectional shape of the fitting provides increased mechanical strength, which results in an improved load transmission through the connection area between the aircraft and the fused composite manufactured fitting, and thus to a better unfolding behaviour.

In particular, the tubular cross-sectional shape provide excellent properties with regard to loading in compression and bending in all directions and, moreover, is an effective configuration for resisting torsional moments. Indeed, tubular structures provide a great strength to weight ratio, as well as both great torsional stiffness and compressive strength.

More in particular, and by virtue of the optimal load distribution of the tubular cross-sectional shape, the third wall which closes the cross-sectional shape of the fitting, being integrally merged with the first and second wall, works in tension, thus contributing to reducing the local forces caused by the undesired unfolding effect.

In the prior art, due to the nature of the materials and the techniques used in the production of structural components by means of conventional composite materials techniques (e.g., pre-preg plies, resin infusion, etc.), a problem known as 'unfolding' exists nowadays in the aircraft industry.

The 'unfolding' consist in a typical failure mode of composite laminates, wherein delamination occurs in both highly-curved and moderately-curved oriented-fibre composite laminates because said curvature induces interlaminar stresses as a result of an opening bending moment.

More in particular, when a curved structure, such as the curved hinging area of the cited structures, is loaded under an opening bending moment which tries to force the curvature of the laminate in order to progress to a flatter geometry, the plies that are part of said laminate are prone to separate like the pages of a book either at the free edges or in the middle.

This effect was mostly caused by differences in the corresponding length of the plies located at the lowest and at the highest radius of curvature. When the Interlaminar shear stresses (ILSS) were high enough, conventional ply delamination was then produced.

This problem of delamination due to 'unfolding' is overcome by this embodiment thanks to the third wall which acts as structural bar-type element to reduce shear stresses and promote tension.

Additionally, in order to provide a smooth and homogeneous structural continuity, that is, without angled corners, wherein stresses may concentrate, the third wall is integrally merged with the first and second walls by means of respective curved transition or hinging areas.

In a particular embodiment, the fused composite manufactured fitting comprises a plurality of separate third walls arranged along the first distal edge of the first wall and the second distal edge of the second wall.

Depending on the fitting length, more than one bar-type element may be necessary to promote tension over shear stresses. Also, physically separating the third walls provides voids or lack of material for weight optimization. This weight reduction may be determined by a prior computer-implemented topologic optimization in order not to be detrimental for the structural behavior.

In a particular embodiment, at least one third wall is either a curved wall with a concave geometry or a substantially flat third wall.

It must be understood that concave, in this context, refers to the shape that curves inward when regarded from a reference internal to the fused composite manufactured fitting.

Accordingly, and in the opposite sense, the present feature should be construed as convex when considered from a reference external to the fused composite manufactured fitting.

In a particular embodiment, at least one third wall is provided with at least one lightening hole.

In addition to the reduction of weight achieved by replacing conventional Titanium based fittings with the new fused composite material fittings provided by the invention, the design flexibility of said fittings provided by the FCM technique allows to further reduce the weight easily.

In particular, since the improvement of unfolding behaviour, as well as the improved load distribution is achieved by the wall that closes a tubular cross-sectional shape of the fitting, working in tension, the fused composite manufactured fitting can be provided with lightening holes which allow reducing the amount of raw material used.

Further advantageously, the presence of these lightening holes, provide a hollow space that allows insertion of elements such as wires, while also providing better cooling features by means of an increase in the surface in contact with the surrounding airfield, especially in those areas exposed to extreme environmental conditions.

It is to be noted that unlike metallic parts where lightening is produced by cut-outs or trimming (i.e., producing waste), the fused composite fabrication only provides the indispensable filaments to build in situ the fitting with the final geometry without any post-processing. Thus, savings in raw material consumption are envisaged.

In a particular embodiment, the fused composite manufactured fitting comprises at least one lateral reinforcing wall comprising a first lateral edge and a second lateral edge, the lateral reinforcing wall being integrally merged with at least the first wall by means of a fourth curved transition area, such that:
- the first lateral edge of the lateral reinforcing wall is at least integrally merged with the first lateral edge of the first wall; and/or
- the first lateral edge of the lateral reinforcing wall is at least integrally merged with the second lateral edge of the first wall.

Similarly to the third wall that acted as a bar-type element, any of the lateral reinforcing walls is also aiming at avoiding a pure bending moment (i.e., shear stresses) on the fitting that may jeopardize its integrity in service.

In a particular embodiment, the fourth curved transition area is shaped as a pipe elbow section, and wherein the lateral reinforcing wall is further integrally merged with the second wall by means of the fourth curved transition area, such that:
- the first lateral edge of the lateral reinforcing wall is extended so as to be also integrally merged with the third lateral edge of the second wall when the first lateral edge of the lateral reinforcing wall is integrally merged with the first lateral edge of the first wall; and/or
- the first lateral edge of the lateral reinforcing wall is extended so as to be also integrally merged with the fourth lateral edge of the second wall when the first lateral edge of the lateral reinforcing wall is integrally merged with the second lateral edge of the first wall.

The pipe elbow section may comprise a 90° elbow, or higher. This embodiment is of special interest for local reinforcement.

In a particular embodiment, the fused composite manufactured fitting comprises two lateral reinforcing walls integrally merged with the first and the second walls respectively by means of two respective fourth curved transition areas, wherein the fitting further comprises an upper reinforcing wall comprising a first lateral edge and a second lateral edge, the upper curved reinforcing wall being integrally merged with the two reinforcing walls by means of two respective fifth curved transition areas shaped as a pipe elbow section, such that:
- the first lateral edge of the upper curved reinforcing wall is integrally merged with the second lateral edge of one lateral reinforcing wall by means of one fifth curved transition area; and
- the second lateral edge of the upper curved reinforcing wall is integrally merged with the second lateral edge of the other lateral reinforcing wall by means of the other fifth curved transition area, and
wherein a closed cross-sectional shape of the fitting is defined such that the fitting comprises a curved hollow beam shape lengthwise comprising a distal end and proximal end.

In a particular embodiment, the fused composite manufactured fitting comprises a front (or *outermost*) reinforcing wall comprising a proximal edge and a first lateral edge and a second lateral edge, the front reinforcing wall being integrally merged:
- with the second wall by means of a sixth curved transition area; and
- with the lateral reinforcing wall by means of a seventh curved transition area, such that:
the proximal edge of the front reinforcing wall is integrally merged with the second distal edge of the second wall; and at least one of the following:
- the first lateral edge of the front reinforcing wall is integrally merged with the second lateral edge of the lateral reinforcing wall when the first lateral edge of the lateral reinforcing wall is integrally merged with the first lateral edge of the first wall; and/or
- the second lateral edge of the front reinforcing wall is integrally merged with the second lateral edge of the lateral reinforcing wall when the first lateral edge of the lateral reinforcing wall is integrally merged with the second lateral edge of the first wall.

In a particular embodiment, the curved hollow beam shape of the fitting further comprises a funneled section protruding from the distal end of the curved hollow beam shape of the fitting towards a distal end of the fitting, and wherein the funneled section comprises:
- at least two coaxial through-holes at opposite walls of the funneled section configured for fixing the fitting to a male structure of an aircraft by means of a hole/shaft basis joint; and/or
- a groove along a length of the funneled section towards the distal end of the fitting, the groove being configured for fixing the fitting to a male structure of an aircraft by means of a tongue and groove joint.

That is, this embodiment provides the male or female part in form of a goose neck of the tongue and groove joint to be secured to a respective female or male lug. This connection is of special application for holding the compartment door of the aircraft tailcone.

If the fitting comprises the groove, it is represented a female part wherein the lug of the counterpart is intended to be placed therein and attached by bolting through the coaxial through-holes.

Otherwise, if there is no groove, this fitting represents a male part whose funneled section in configured to be positioned between a dual lug (acting as the female part).

In this embodiment, the funneled section narrows as it protrudes toward the distal end of the fitting in order to be accommodated between the lugs of the dual lug components to be bolted thereto.

Therefore, the options of this embodiment allows the fitting to be secured either to a single lug component or a dual lug component.

Furthermore, in case this fitting needs to meet more demanding requirements, the curved hollow beam shape may be infilled by injection molding of neat plastic, foam, or any other suitable polymeric infilling.

Thus, in a preferred embodiment, the curved hollow beam shape comprises a polymeric infilling.

Advantageously, this fitting is stronger than a non-filled embodiment, so the failure requirements are less restrictive. That is, in a degraded mode where one female fitting failed, the remainder infilled fittings may still allow to operate the tailcone door properly.

In a second inventive aspect, the invention provides a method for manufacturing a fitting according to any of the embodiments of the first inventive aspect by Fused Composite Manufacturing techniques and intended to secure parts of an aircraft by means of securing areas, wherein the method comprises:
determining a 3D design of the fitting by the following steps:
- providing:
   - the 3D design of a current fitting manufactured in metallic material, preferably titanium alloy, and subjected to local stress concentrations in use by a set of external forces, wherein this 3D design comprises at least a first and a second substantially flat walls, each of them configured for being secured to respective parts of an aircraft by means of securing areas;
   - the stress state applied over the fitting by said local stress concentrations; and
   - anisotropic mechanical properties of a fibrous material reinforcement embedded within meltable material;
- modifying topologically the baseline 3D design constrained by the securing areas in such a way local stress concentrations are offloaded on the fitting, wherein such modification is performed by:
   - modifying the deposition path of the fibrous material reinforcement embedded within meltable material, and/or
   - providing reinforcing walls protruding beyond at least one edge of the 3D design, such that;
      ▪ reinforcing walls are merged at different lateral edges for increasing bending stiffness of the fitting; and/or
      ▪ reinforcing walls are merged at different distal edges for increasing torsional stiffness,
- wherein each modified 3D design with a deposition path and a set of reinforcing walls, if applies, is modeled by defining a Finite Element model (FEM) of said design and populate said model with mechanical properties of the fibrous material reinforcement embedded within meltable material, and simulated with the external forces applied in use as boundary conditions;
- calculating the local stress concentrations of the fitting; and determining the final design of the fitting if the local stress concentrations calculated are below a pre-established threshold, this threshold being preferably below the ones of the original metallic 3D design; and
- providing said final design of the fitting according to the previous step together with the deposition path to be manufactured with; and
manufacturing the fitting according to the design determined in the previous step applying the determined deposition path.

As mentioned, a fitting is a structural element intended for joining different angled elements and, therefore, it is provided with a first and a second substantially flat walls with respective securing areas. These securing areas may be provided with holes to be bolted, riveted, or fastened to the secured parts. Likewise, industrial adhesives may accomplish a satisfactory joining.

As known, FEM models are numerical methods that allows to perform a structural analysis of a meshed and populated 3D design. In other words, the structural behavior under a set of external forces can be simulated and local stress concentrations properly identified. By this information, it can be further determined whether the 3D design (represented by the populated mesh with the desired properties) can withstand these external forces without surpassing the yield point or the ultimate tensile strength.

In fused composite manufactured parts, further criterion to establish whether a part may withstand the expected loads is the interlaminar tensile strength (ILTS) and/or the interlaminar shear strength (ILSS). Thus, the fitting according to the invention should account for two main aspects: an appropriate 3D design, and the deposition path of the fibrous material reinforcement embedded within meltable material to build that shape.

Therefore, in an embodiment, the local stress concentrations to be calculated for the final design of the fitting are interlaminar tensile strength (ILTS) and/or the interlaminar shear strength (ILSS).

As the skilled person shall recognize, 3D parts can be built with fibre oriented along the direction of the loads in order to effectively transmit them. Therefore, in an embodiment, a single filament may be contained within a wall of the fitting or may go beyond toward the curved transition area toward other wall.

In a particular embodiment, the step of topologically modifying the 3D design further comprises:
- reducing or increasing the thickness of at least a portion of the 3D design.

That is, reducing or increasing the thickness of the first wall, and/or the curved transition area and/or the second wall.

In a particular embodiment, the step of topologically modifying the 3D design by gradually providing reinforcing walls protruding beyond at least one edge of the 3D design further comprises:
- extending the flange along the entire edge of the 3D design; and/or
- reducing or increasing the width of the flange.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows an embodiment of a fused composite manufactured fitting according to the invention comprising a first and second substantially flat walls.
- Figure 2: This figure shows an embodiment of a fused composite manufactured fitting according to the invention.
- Figure 3: This figure shows an embodiment of a fused composite manufactured fitting according to the invention.
- Figure 4: This figure shows an embodiment of a fused composite manufactured fitting according to the invention.
- Figure 5: This figure shows an embodiment of a fused composite manufactured fitting according to the invention.
- Figure 6: This figure shows an embodiment of a fused composite manufactured fitting according to the invention.
- Figures 7a-7b: These figures show (a) an embodiment of a fused composite manufactured fitting according to the invention, and (b) its connection with a single male lug of a tailcone door.
- Figures 8a-8b: These figures show (a) an embodiment of a fused composite manufactured fitting according to the invention, and (b) its connection with a dual female lug of a tailcone door.

### DETAILED DESCRIPTION OF THE INVENTION

Once the object of the invention has been outlined, specific non-limitative embodiments are described hereinafter.

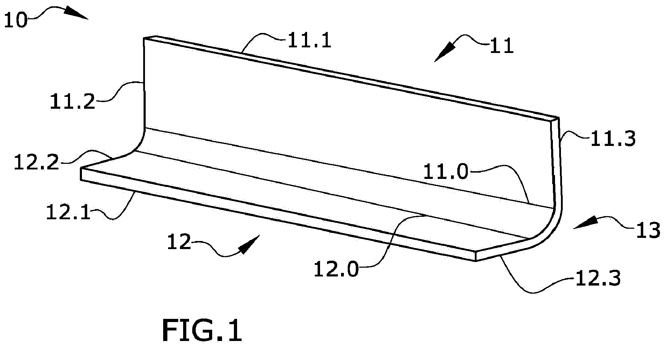

Figure 1 depicts a fused composite manufactured fitting (10) configured to be fixed and, thus, for reinforcing a local part of the airframe or for serving as a connection between parts in the aircraft. More in particular, the connection area of the part of the aircraft to which the fitting (10) will be fixed comprises a corner, i.e., a highly curved portion. That is, the connection area will have two different surfaces, comprised in two respective planes which are oblique to each other, connected by means of a curved transition or hinging area. Accordingly, the fused composite manufactured fitting (10) shown comprises two substantially flat walls (11, 12) intended for being fixed respectively to both surfaces of the aircraft, as well as to said curved transition of hinging area.

More in particular, the fitting (10) shown comprises a first substantially flat wall (11) which, in turn, comprises a first proximal edge (11.0) and a first distal edge (11.1), and a first and a second lateral edges (11.2, 11.3). In turn, the second substantially flat wall (12) comprises a second proximal edge (12.0) and a second distal edge (12.1), and a third and a fourth lateral edges (12.2, 12.3).

Both first (11) and second (12) substantially flat walls are integrally merged through each respective first (11.0) and second (12.0) proximal edges by a first curved transition area (13), which is shaped as a cylindrical segment.

The fitting (10) is configured to be fixed to two perpendicular surfaces, and so the first and second substantially flat walls (11, 12) are both parallel to a longitudinal axis of the first curved transition area (13).

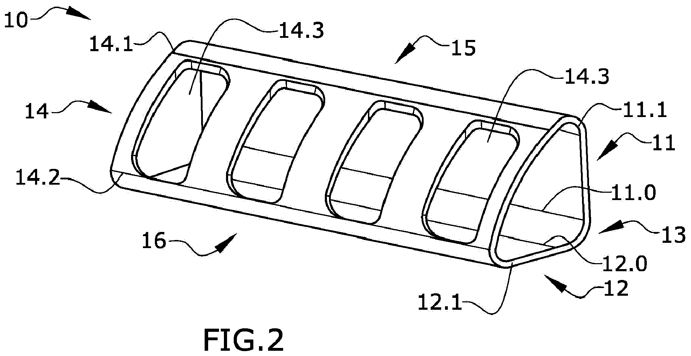

Figure 2 represents the fused composite manufactured fitting (10) of figure 1, wherein a plurality of separate third walls (14) have been provided, arranged along the first distal edge (11.1) of the first wall (11) and the second distal edge (12.2) of the second wall (12), for improving the mechanical properties of the fitting (10).

In particular, the fitting (10) is shaped with a hollow beam geometry lengthwise (i.e., with a tubular cross-sectional shape), which results in an improved behaviour due to a higher strength to weight ratio, as well as both great torsional stiffness and compressive strength. In this sense, each of the plurality of third walls (14) works in tension by virtue of the optimal load distribution of the hollow beam shape, thus contributing to reducing the local forces due to unfolding.

Each of the third walls (14) is integrally merged with the first and second walls (11, 12) by means of a respective first edge (14.1) and a second edge (14.2). In order to provide a smooth and homogeneous structural continuity, that is, without angled corners, wherein stresses may concentrate, the third walls (14) are integrally merged with the first and second walls (11, 12) by means of respective curved transition or hinging areas.

In particular, the first edges (14.1) of each third wall (14) are integrally merged with a portion of the first distal edge (11.1) of the first wall (11) by means of a second curved transition area (15) shaped as a cylindrical segment; and the second edges (14.2) of each third wall (14) are integrally merged with a portion of the second distal edge (12.2) of the second wall (12) by means of a third curved transition area (16) shaped as a cylindrical segment.

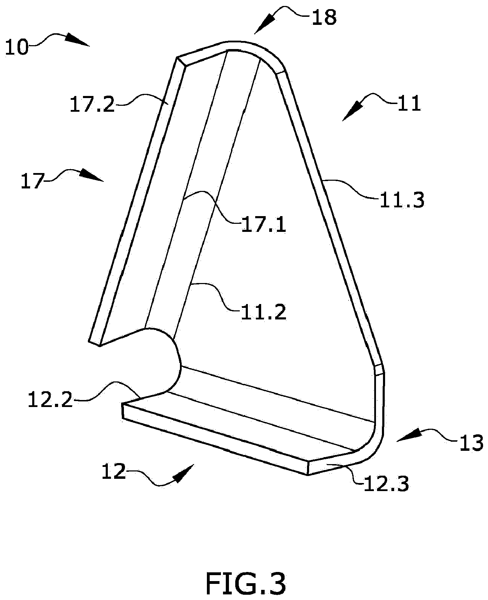

Figure 3 depicts a fused composite manufactured fitting (10) having a shape adapted for allowing the fitting (10) to be fixed to a surface of the aircraft which comprises a highly curved corner, and a complex geometry. In particular the first wall (11), which is comprised in a vertical plane according to the provided view of figure 3, has a wedge-like shape. That is, in the embodiment shown, the first distal edge (11.1) of the first wall (11), is not parallel to the longitudinal axis of the curved transition area (13). Instead, it is now arranged oblique with respect to said curved transition area (13) to allow accommodating and fixing the fused composite material fitting (13) onto the connection area of the aircraft.

Additionally, the fitting (10) shown comprises one lateral reinforcing wall (17) configured to reinforce the mechanical behaviour of the fitting (10), in such a way that, in addition to providing directional reinforcement to support the local loads transmitted through the fitting (10), provides an additional connection area with a surface of the aircraft.

Said reinforcing wall (17) comprises a first lateral edge (17.1) and a second lateral edge (17). Again, in order to provide a smooth and homogeneous structural continuity, that is, without angled corners, wherein stresses may concentrate, said reinforcing wall (17) is integrally merged with the first wall (11) by means of a fourth curved transition area (18), such that the first lateral edge (17.1) of the lateral reinforcing wall (17) is integrally merged with the first lateral edge (11.2) of the first wall (11).

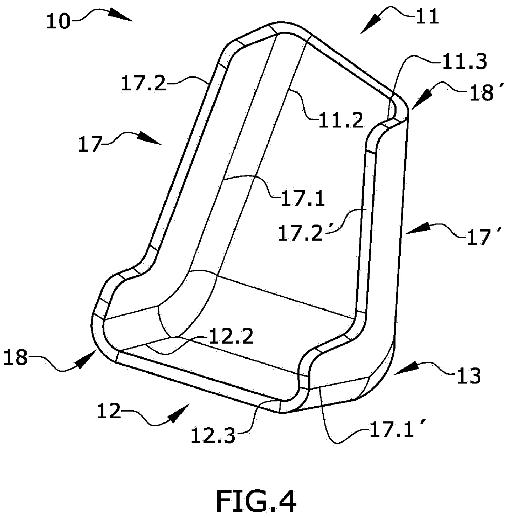

Figure 4 represents the fused composite manufactured fitting (10) of figure 3, wherein the fourth curved transition area (18) is shaped as a pipe elbow section, and wherein the lateral reinforcing wall (17) is extended so as to be further integrally merged with the second wall (12) as well as with the first wall (11).

In particular, both the fourth curved transition area (18) and the first lateral edge (17.1) of the lateral reinforcing wall (17) are extended so as to be also integrally merged with the third lateral edge (12.2) of the second wall (12).

Advantageously, the fitting (10) is provided with improved structural continuity, which results in a better load transmission therethrough.

Additionally, as can be seen, an additional reinforcing wall (17') has been provided. The additional reinforcing wall (17') comprises a first lateral edge (17,1') and a second lateral edge (17.2') and is integrally merged with the first and second walls (11, 12) in the very same manner than the first reinforcing wall (17) by means of an additional fourth curved transition area (18') shaped as a pipe elbow section.

In particular, the first lateral edge (17.1') of the additional reinforcing wall (17') is integrally merged with the second (11.3) and fourth lateral edges (12.3) of the second wall (12) by means of said additional fourth curved transition area (18').

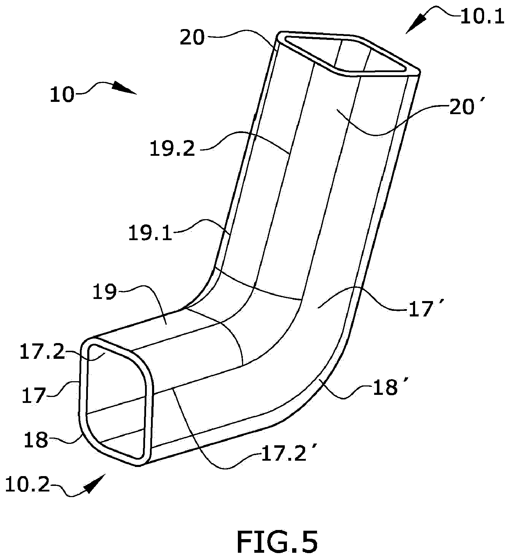

Figure 5 depicts the fused composite manufactured fitting (10) of figure 4, modified so as to comprise a curved hollow beam shape lengthwise, or, in other words, a tubular configuration.

The fitting (10) shown comprises an upper reinforcing wall (19) which is integrally merged with the rest of the elements of the fitting (10) so as to close the cross-sectional shape and achieve said hollow beam configuration.

In this regard, the upper reinforcing wall comprises a first lateral edge (19.1) and a second lateral edge (19.2), each of them being integrally merged respectively with the two reinforcing walls (17, 17') by means of two respective fifth curved transition areas (20, 20') shaped as pipe elbow sections.

On one side, the first lateral edge (19.1) of the upper curved reinforcing wall (19) is integrally merged with the second lateral edge (17.2) of one lateral reinforcing wall (17) by means of one fifth curved transition area (20).

On the other side, the second lateral edge (19.2) of the upper curved reinforcing wall (19) is integrally merged with the second lateral edge (17.2') of the other lateral reinforcing wall (17') by means of the other fifth curved transition area (20').

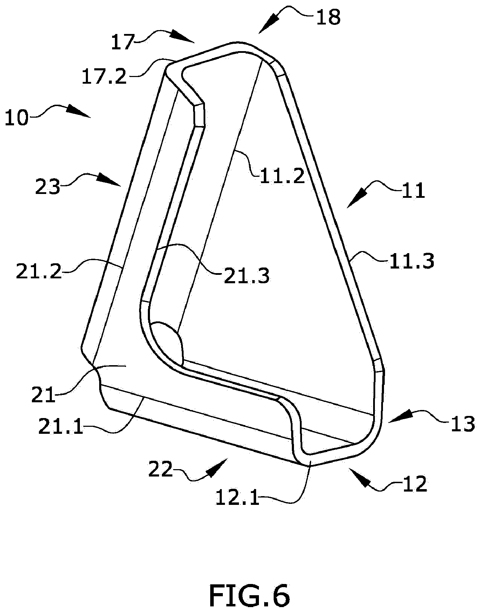

Figure 6 represents the fused composite manufactured fitting (10) of figure 3, wherein an outermost reinforcing wall (21) has been provided. Said outermost reinforcing wall (21) comprises a proximal edge (21.1) and a first lateral edge (21.2) and a second lateral edge (21.3).

As can be seen, the front reinforcing wall (21) is integrally merged with the second wall (12) by means of a sixth curved transition area (22).

In the same way, the front reinforcing wall (21) is also integrally merged with the lateral reinforcing wall (17) by means of a seventh curved transition area (23), such that the proximal edge (21.1) of the front reinforcing wall (21) is integrally merged with the second distal edge (12.1) of the second wall (12); and the first lateral edge (21.2) of the front reinforcing wall (21) is integrally merged with the second lateral edge (17.2) of the lateral reinforcing wall (17).

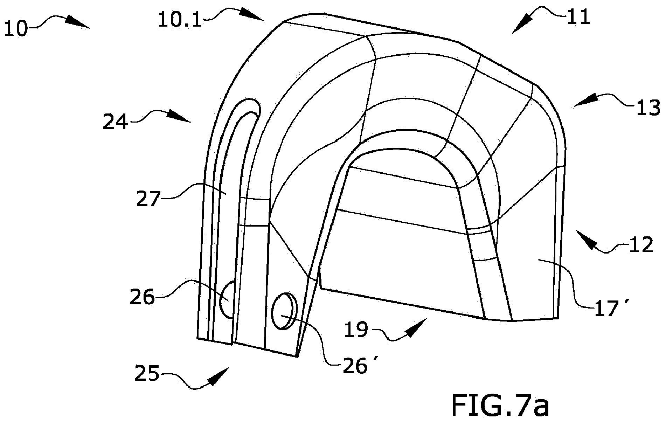

Figure 7a depicts a fused composite manufactured fitting (10) comprising a curved hollow beam shape lengthwise, comprising a distal end (10.1) and a proximal end (10.2).

As can be seen, the fitting (10) further comprises a funneled section (24) protruding from the distal end (10.1) of the curved hollow beam shape of the fitting (10) towards a distal end (25) of the fitting (10).

Said funneled section (24) comprises two coaxial through-holes (26, 26') at opposite walls of the funneled section (24) configured for fixing the fitting (10) to a male structure of an aircraft by means of a hole/shaft basis joint.

Additionally, the funneled section (24) also comprises a groove (27) along a length of the funneled section (24) towards the distal end (25) of the fitting (10), the groove (27) being configured for fixing the fitting (10) to a male structure of an aircraft by means of a tongue and groove joint.

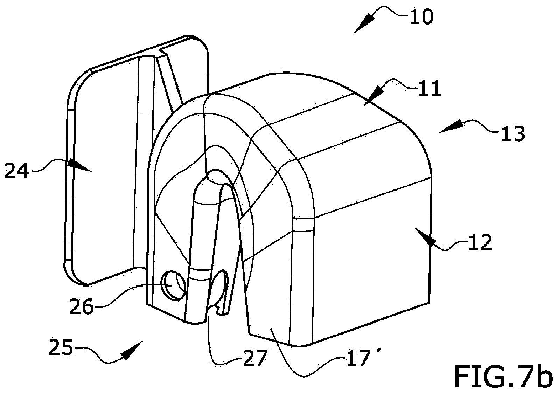

In figure 7b, it is depicted said female fitting (10) connected to a single male lug typically used for hanging an access door of the tailcone of the aircraft. It can be seen that the groove (27) is configured to receive the lug therein.

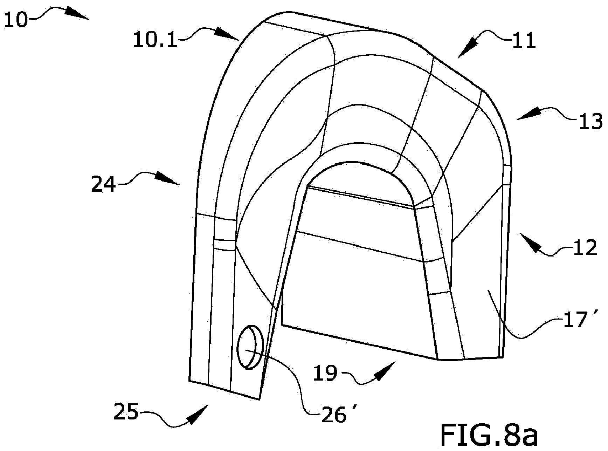

Figure 8a depicts a fitting (10) similar to that of figure 7a, but without the groove (27) on the funneled section (24) as it should act as a male fitting (10) intended to be connected to a dual lug component.

As it can be seen, the funneled section (24) narrows as it protrudes toward the distal end (10.1) of the fitting (10) in order to be accommodated between the lugs of the dual lug components to be bolted thereto.

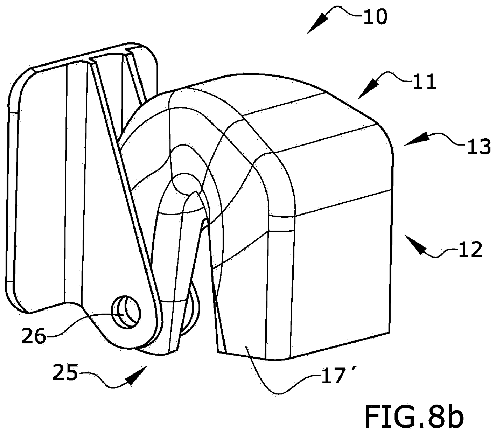

In figure 8b, it can be seen the connection of this male fitting with the dual lug component for allowing opening of the access door of the tailcone.

The bolts provide a hinge line for pivoting the door between an open position and a closed position.

As the skilled person shall understand, the female fitting (10) of figure 7a may be designed so as to accommodate a male fitting (10) according to figure 8a. In particular, the groove (27) may allow the insertion of the thinner funneled section (24) of the male fitting (10), while the four through-holes (26, 26') must be coaxial in order to allow the insertion of the hinging bolt.

## Claims

1. Fused composite manufactured fitting (10) comprising:
- a first substantially flat wall (11) comprising a first proximal edge (11.0) and a first distal edge (11.1), and a first and a second lateral edges (11.2, 11.3);
- a second substantially flat wall (12) comprising a second proximal edge (12.0) and a second distal edge (12.1), and a third and a fourth lateral edges (12.2, 12.3);
- a first curved transition area (13) integrally merging the first proximal edge (11.0) of the first flat wall (11) with the second proximal edge (12.0) of the second flat wall (12);
wherein
the first curved transition area (13) is shaped as a cylindrical segment,
the first and second substantially flat walls (11, 12) are at an angle with respect to each other; and
the first and second substantially flat walls (11, 12) are both parallel to a longitudinal axis of the first curved transition area (13), and at least one of the first and second distal edges (11.1, 12.1) is substantially parallel to the longitudinal axis of the curved transition area (13).

2. Fused composite manufactured fitting (10) according to the previous claim, wherein at least one of the lateral edges (11.2, 11.3, 12.2, 12.3) is substantially perpendicular to the longitudinal axis of the curved transition area (13).

3. Fused composite manufactured fitting (10) according to any of the previous claims, wherein at least one of the first and second distal edges (11.1, 12.1) is oblique to the longitudinal axis of the curved transition area (13).

4. Fused composite manufactured fitting (10) according to any of the previous claims, wherein at least one of the lateral edges (11.2, 11.3, 12.2, 12.3) is oblique to the longitudinal axis of the curved transition area (13).

5. Fused composite manufactured fitting (10) according to any of the previous claims further comprising a third wall (14) comprising a first edge (14.1) and a second edge (14.2), the third wall (14) being integrally merged with the first and second walls (11, 12), such that:
- the first edge (14.1) of the third wall (14) is integrally merged with at least a portion of the first distal edge (11.1) of the first wall (11) by means of a second curved transition area (15) shaped as a cylindrical segment; and
- the second edge (14.2) of the third wall (14) is integrally merged with at least a portion of the second distal edge (12.2) of the second wall (12) by means of a third curved transition area (16) shaped as a cylindrical segment,
wherein
a closed cross-sectional shape of the fitting (10) is defined such that the fitting (10) comprises a hollow beam shape lengthwise.

6. Fused composite manufactured fitting (10) according to the previous claim, the fitting comprising a plurality of separate third walls (14) arranged along the first distal edge (11.1) of the first wall (11) and the second distal edge (12.2) of the second wall (12).

7. Fused composite manufactured fitting (10) according to any of claims 5 or 6, wherein at least one third wall (14) is either a curved wall with a concave geometry or a substantially flat third wall.

8. Fused composite manufactured fitting (10) according to any of claims 5 - 7, wherein at least one third wall (14) is provided with at least one lightening hole (14.3).

9. Fused composite manufactured fitting (10) according to any of claims 1 - 4 further comprising at least one lateral reinforcing wall (17, 17') comprising a first lateral edge (17.1, 17.1') and a second lateral edge (17.2), the lateral reinforcing wall (17, 17') being integrally merged with at least the first wall (11) by means of a fourth curved transition area (18, 18'), such that:
- the first lateral edge (17.1) of the lateral reinforcing wall (17) is at least integrally merged with the first lateral edge (11.2) of the first wall (11); and/or
- the first lateral edge (17.1') of the lateral reinforcing wall (17') is at least integrally merged with the second lateral edge (11.3) of the first wall (11).

10. Fused composite manufactured fitting (10) according to claim 9, wherein the fourth curved transition area (18) is shaped as a pipe elbow section, and wherein the lateral reinforcing wall (17, 17') is further integrally merged with the second wall (12) by means of the fourth curved transition area (18, 18'), such that:
- the first lateral edge (17.1) of the lateral reinforcing wall (17) is extended so as to be also integrally merged with the third lateral edge (12.2) of the second wall (12) when the first lateral edge (17.1) of the lateral reinforcing wall (17) is integrally merged with the first lateral edge (11.2) of the first wall (11); and/or
- the first lateral edge (17.1') of the lateral reinforcing wall (17') is extended so as to be also integrally merged with the fourth lateral edge (12.3) of the second wall (12) when the first lateral edge (17.1') of the lateral reinforcing wall (17') is integrally merged with the second lateral edge (11.3) of the first wall (11).

11. Fused composite manufactured fitting (10) according to claim 10 comprising two lateral reinforcing walls (17, 17') integrally merged with the first and the second walls (11, 12) respectively by means of two respective fourth curved transition areas (18, 18'), wherein the fitting (10) further comprises an upper reinforcing wall (19) comprising a first lateral edge (19.1) and a second lateral edge (19.2), the upper curved reinforcing wall (19) being integrally merged with the two reinforcing walls (17, 17') by means of two respective fifth curved transition areas (20, 20') shaped as a pipe elbow section, such that:
- the first lateral edge (19.1) of the upper curved reinforcing wall (19) is integrally merged with the second lateral edge (17.2) of one lateral reinforcing wall (17) by means of one fifth curved transition area (20); and
- the second lateral edge (19.2) of the upper curved reinforcing wall (19) is integrally merged with the second lateral edge (17.2') of the other lateral reinforcing wall (17') by means of the other fifth curved transition area (20'), and wherein a closed cross-sectional shape of the fitting (10) is defined such that the fitting (10) comprises a curved hollow beam shape lengthwise comprising a distal end (10.1) and proximal end (10.2).

12. Fused composite manufactured fitting (10) according to any of previous claims and claim 9, further comprising a front reinforcing wall (21) comprising a proximal edge (21.1) and a first lateral edge (21.2) and a second lateral edge (21.3), the front reinforcing wall (21) being integrally merged:
- with the second wall (12) by means of a sixth curved transition area (22); and
- with the lateral reinforcing wall (17, 17') by means of a seventh curved transition area (23), such that:
the proximal edge (21.1) of the front reinforcing wall (21) is integrally merged with the second distal edge (12.1) of the second wall (12); and at least one of the following:
- the first lateral edge (21.2) of the front reinforcing wall (21) is integrally merged with the second lateral edge (17.2) of the lateral reinforcing wall (17) when the first lateral edge (17.1) of the lateral reinforcing wall (17) is integrally merged with the first lateral edge (11.2) of the first wall (11); and/or
- the second lateral edge (21.3) of the front reinforcing wall (21) is integrally merged with the second lateral edge (17.2') of the lateral reinforcing wall (17') when the first lateral edge (17.1') of the lateral reinforcing wall (17') is integrally merged with the second lateral edge (11.3) of the first wall (11).

13. Fused composite manufactured fitting (10) according to claim 11, wherein the curved hollow beam shape of the fitting (10) further comprises a funneled section (24) protruding from the distal end (10.1) of the curved hollow beam shape of the fitting (10) towards a distal end (25) of the fitting (10), and wherein the funneled section (24) comprises:
- at least two coaxial through-holes (26, 26') at opposite walls of the funneled section (24) configured for fixing the fitting (10) to a male structure of an aircraft by means of a hole/shaft basis joint; and/or
- a groove (27) along a length of the funneled section (24) towards the distal end (25) of the fitting (10), the groove (27) being configured for fixing the fitting (10) to a male structure of an aircraft by means of a tongue and groove joint.

14. Fused composite manufactured fitting (10) according to claim 13, wherein the curved hollow beam shape comprises a polymeric infilling.

15. Method for manufacturing a fitting according to claims 1-14 by Fused Composite Manufacturing techniques and intended to secure parts of an aircraft by means of securing areas, wherein the method comprises:
determining a 3D design of the fitting by the following steps:
- providing:
- the 3D design of a current fitting manufactured in metallic material, preferably titanium alloy, and subjected to local stress concentrations in use by a set of external forces, wherein the 3D design comprises at least a first and a second substantially flat walls, each of them configured for being secured to respective parts of an aircraft by means of securing areas;
- the stress state applied over the fitting by said local stress concentrations; and
- the anisotropic mechanical properties of a fibrous material reinforcement embedded within meltable material;
- modifying topologically the baseline 3D design constrained by the securing areas in such a way local stress concentrations are offloaded on the fitting, wherein such modification is performed by:
- modifying the deposition path of the fibrous material reinforcement embedded within meltable material, and/or
- providing reinforcing walls protruding beyond at least one edge of the 3D design, such that;
▪ reinforcing walls are merged at different lateral edges for increasing bending stiffness of the fitting; and/or
▪ reinforcing walls are merged at different distal edges for increasing torsional stiffness,
- wherein each modified 3D design with a deposition path and a set of reinforcing walls, if applies, is modeled by defining a Finite Element model (FEM) model of said design and populate said model with mechanical properties of the fibrous material reinforcement embedded within meltable material, and simulated with the external forces applied in use as boundary conditions;
- calculating the local stress concentrations of the fitting; and determining the final design of the fitting if the local stress concentrations calculated are below an pre-established threshold, this threshold being preferably below the ones of the original metallic 3D design; and
- providing said final design of the fitting according to the previous step together with the deposition path to be manufactured with; and
manufacturing the fitting according to the design determined in the previous step applying the determined deposition path.
